(19) Europäisches Patentamt
European Patent Office
Office européen des brevets

(11) **EP 4 321 310 B1**

(12) **EUROPEAN PATENT SPECIFICATION**

(45) Date of publication and mention
of the grant of the patent:
**21.01.2026   Bulletin 2026/04**

(21) Application number: **22876843.8**

(22) Date of filing: **28.09.2022**

(51) International Patent Classification (IPC):
**B25J 9/16** *(2006.01)*          **B25J 5/00** *(2006.01)*
**G05D 1/00** *(2024.01)*          **G01S 5/02** *(2010.01)*
**G01S 5/12** *(2006.01)*

(52) Cooperative Patent Classification (CPC):
**G05D 1/0274; G01S 5/0284; G05D 1/0238;
G05D 1/028;** G01S 5/12

(86) International application number:
**PCT/KR2022/014555**

(87) International publication number:
**WO 2023/055071 (06.04.2023 Gazette 2023/14)**

(54) **ROBOT AND CONTROLLING METHOD THEREOF**

ROBOTER UND STEUERUNGSVERFAHREN DAFÜR

ROBOT ET PROCÉDÉ DE COMMANDE DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **29.09.2021   KR 20210129114**

(43) Date of publication of application:
**14.02.2024   Bulletin 2024/07**

(73) Proprietor: **Samsung Electronics Co., Ltd.
Suwon-si, Gyeonggi-do 16677 (KR)**

(72) Inventors:
• **KANG, Hyunkoo
Suwon-si, Gyeonggi-do 16677 (KR)**
• **CHOI, Sanghwa
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(56) References cited:
CN-A- 112 130 559          KR-A- 20200 103 203
KR-A- 20210 039 869          KR-A- 20210 057 364
KR-A- 20210 080 310          US-A1- 2014 142 757
US-A1- 2018 052 466          US-A1- 2020 223 056

## Description

[Technical Field]

The disclosure relates to a robot and a controlling method thereof and more particularly, to a robot which changes a traveling method to an object based on an Ultra-Wideband (UWB) signal received from the object and a controlling method thereof.

[Background Art]

Robots of the related art may be implemented by identifying a location of a robot through Light Detection and Ranging (Lidar) to travel to an object and using vision-based object recognition technology.

Robot of the related art require Lidar, Neural Processing Unit (NPU) for computing to recognize an object, and the like to implement a function of traveling to an object, and significant cost has been spent to this end. For example, US 2020/223056 A1 discloses a mobile robot moving to a target position indicated by a user terminal, the mobile robot includes a driver configured to move the mobile robot; a communication interface configured to exchange a wireless signal with each of a first terminal transceiver and a second terminal transceiver included in the user terminal; and a controller configured to control the driver to move to the target position after transmission and reception of the wireless signal with the first terminal transceiver and transmission and reception of the wireless signal with the second terminal transceiver. CN 112 130 559 A describes an indoor pedestrian following and obstacle avoidance method based on UWB and laser radar. US 2014/142757 A1 relates to a mobile robot guest for interacting with a human resident performing a room-traversing search procedure prior to interacting with the resident, and may verbally query whether the resident being sought is present. However, robots of the related art have had the problem of a function of finding and traveling to an object not being possible when obstacles such as a wall, a furniture, and the like are located between the robot and the object, and the vision-based object recognition has been affected in that an implementation rate of a function of traveling to an object is affected according to illumination and lighting conditions.

[Disclosure]

[Technical Problem]

To solve the problems of the related art, the disclosure provides a robot traveling to an object without spatial limitation by using a low-cost UWB module and a controlling method thereof.

[Technical Solution]

According to an embodiment, a controlling method of a robot includes receiving a first Ultra-Wideband (UWB) signal from an object, identifying, based on the received first UWB signal, whether the robot is located in a same space as with the object, and in response to the identifying that the robot is located in the same space as with the object, controlling the robot to travel to the object based on the received first UWB signal, and in response to the identifying that the robot is located in a space different from where the object is located, controlling the robot to move to the same space as with the object by using coordinate information of the robot and coordinate information of the object received from a beacon which is located in the same space as with the robot or a sensing value obtained from a distance sensor.

The identifying includes identifying, based on an attenuation amount of the received first UWB signal being less than or equal to a first threshold value, that the robot is located in the same space as with the object, and identifying, based on an attenuation amount of the received first UWB signal exceeding the first threshold value, that the robot is located in the space different from where the object is located.

The controlling of the robot to travel to the object may further include identifying a distance and a direction to the object based on the received first UWB signal, and controlling the robot to travel to the object based on the identified distance and the identified direction.

The controlling of the robot to travel to the object may further include based on the identified distance and the identified direction, controlling the robot to move to a point at which a distance and an angle to the object are preset values.

The controlling method of the robot may further include receiving activity level information of the object from the object, identifying whether a traveling direction of the robot matches a traveling direction to the object are a match based on the received activity level information and the identified distance, and rotating the robot in response to the identifying that the traveling direction of the robot does not match the traveling direction to the object.

The controlling method of the robot may further include identifying an obstacle through the distance sensor while the robot is traveling to the object, and reducing a traveling speed of the robot and rotating the robot in response to the identifying of the obstacle.

The controlling method of the robot may further include receiving a second UWB signal from the beacon, identifying, based on an attenuation amount of the second UWB signal received from the beacon being less than or equal to a second threshold value, that the robot is located in the same space as with the beacon; and identifying, based on an attenuation amount of the second UWB signal received from the beacon exceeding the threshold value, that the robot is located in a space different from where the beacon is located.

The controlling of the robot to move to the same space as with the object may further include in response to the identifying that the robot is located in the space different from where the object is located but located in the same space as with the beacon, receiving the coordinate information of the robot and the coordinate information of the object received from the beacon, obtaining surrounding map information of the robot by using the sensing value obtained from the distance sensor, and controlling the robot to move to the same space as with the object based on the received coordinate information of the robot, the received coordinate information of the object, and the obtained surrounding map information.

The controlling method of the robot may further include in response to the identifying that the robot is located in the space different from where the object is located and located in the space different from where the beacon is located, identifying at least one candidate point based on the sensing value obtained through the distance sensor, and based on the identified at least one candidate point, controlling the robot to move to the same space as with the object.

According to an embodiment, a robot includes a traveling part configured to move the robot, a communication interface comprising an Ultra-Wideband (UWB) module to receive an external UWB signal, a distance sensor to measure a distance from the robot, a memory configured to store at least one instruction, and a processor which executes the at least one stored instruction to cause the following to be performed: receiving by executing the at least one instruction, a first UWB signal through the UWB module from an object, identifying, based on the received first UWB signal, whether it is located in a same space as with the object, and in response to the identifying that the robot is located in the same space as with the object, controlling the traveling part to travel the robot to the object based on the received first UWB signal, and in response to the identifying that the robot is located in a space different from where the object is located, controlling the traveling part to move to the same space as with the object by using coordinate information of the robot and coordinate information the object which is received from a beacon located in the same space as with the robot or a sensing value obtained from the distance sensor.

The processor is further configured to identify, based on an attenuation amount of the received first UWB signal being less than or equal to a first threshold value, identifying that the robot is located in the same space as with the object, and identify, based on an attenuation amount of the received first UWB signal exceeding the first threshold value, the robot is located in a space different from where the object is located.

The processor may be further configured to identify a distance and a direction to the object based on the received first UWB signal, and control the traveling part to travel to the object based on the identified distance and the identified direction.

The processor may be configured to control, based on the identified distance and the identified direction, the traveling part to move to a point at which a distance and an angle to the object are preset values.

The processor may be configured to receive activity level information of the object from the object through the communication interface, identify whether a traveling direction of the robot matches a traveling direction to the object based on the received activity level information and the identified distance, and control, in response to the identifying that the traveling direction of the robot does not match the traveling direction to the object, the traveling part to rotate the robot.

The processor may be configured to identify an obstacle through the distance sensor while the robot is traveling to the object, and control the traveling part to reduce a traveling speed of the robot and rotate the robot in response to the identifying of the obstacle.

The processor may be configured to receive a second UWB signal from the beacon through the communication interface, identify, based on an attenuation amount of the second UWB signal received from the beacon being less than or equal to a threshold value, the robot is located in the same space as with the beacon, and identify, based on an attenuation amount of the second UWB signal received from the beacon exceeding the threshold value, the robot is located in the space different from where the beacon is located.

The processor may be configured to receive, in response to the identifying that the robot is located in the space different from where the object is located but located in the same space as with the beacon, the coordinate information of the robot and the coordinate information of the object received from the beacon, and obtain surrounding map information of the robot by using the sensing value obtained from the distance sensor, and control, based on the received coordinate information of the robot, the received coordinate information of the object, and the obtained surrounding map information, the traveling part to move to the same space as with the object.

The processor may be configured to identify, in response to the identifying that the robot is located in the space different from where the object is located and located in the space different from where the beacon is located, at least one candidate point based on the sensing value obtained through the distance sensor, and control, based on the identified at least one candidate point, the traveling part to move the robot to be located in the same space as with the object.

According to an embodiment, a computer readable recording medium including a program for executing a controlling method of a robot includes receiving a first Ultra-Wideband (UWB) signal from an object, identifying, based on the received first UWB signal, whether the robot is located in a same space as with the object, and in response to the identifying that the robot is located in the same space as with the object, controlling the robot to travel to the object based on the received first UWB signal, and in response to the identifying that the robot is located in a space different from where the object is located, controlling the robot to move to the same space as with the object by using coordinate information of the robot and coordinate information of the object received from a beacon which is located in the same space as with the robot or a sensing value obtained from a distance sensor.

[Advantageous Effects]

Through the above-described embodiments, the robot may travel to the object by using the UWB module, and have an improved effect of being able to implement the robot traveling to the object at a low-cost, and traveling to the object without spatial limitation.

[Description of Drawings]

The above and other aspects, features, and advantages of certain embodiments of the present disclosure will be more apparent from the following description taken in conjunction with the accompanying drawings, in which:

> FIG. 1 is a block diagram illustrating a configuration of a robot according to an embodiment;
> FIG. 2 is a diagram illustrating a controlling method of a robot according to an embodiment;
> FIG. 3A to FIG. 3B are diagrams illustrating a method of a robot traveling to an object when the robot and the object are located in a same space according to an embodiment;
> FIGS. 4A, 4B, 4C and 4D are diagrams illustrating a method of traveling by a robot to move to a same space as with an object when the robot and the object are located in different spaces and the robot and a beacon are located in the same space according to an embodiment;
> FIGS. 5A, 5B, 5C and 5D are diagrams illustrating a method of traveling by a robot to move to a same space as with an object when the robot is located in a different space from the object and a beacon according to an embodiment; and
> FIG. 6 is a flowchart illustrating a controlling method of a robot according to an embodiment.

[Best Mode]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, and should be interpreted to include all modifications, equivalents or alternatives of the embodiments included herein. In describing the embodiments, like reference numerals may be used to refer to like elements.

In case it is determined that in describing the embodiments, the detailed description of related known technologies may unnecessarily confuse the gist of the disclosure, the detailed description will be omitted.

Further, the embodiments below may be modified to various different forms, and it is to be understood that the scope of the technical spirit of the disclosure is not limited to the embodiments below. Rather, the embodiments are provided so that the disclosure will be thorough and complete, and to fully convey the technical spirit of the disclosure to those skilled in the art.

Terms used herein have merely been used to describe a specific embodiment, and it is not intended to limit the scope of protection. A singular expression includes a plural expression, unless otherwise specified.

In the disclosure, expressions such as "comprise," "may comprise," "include," "may include," or the like are used to designate a presence of a corresponding characteristic (e.g., elements such as numerical value, function, operation, or component, etc.), and not to preclude a presence or a possibility of additional characteristics.

In the disclosure, expressions such as "A or B," "at least one of A and/or B," or "one or more of A and/or B" may include all possible combinations of the items listed together. For example, "A or B," "at least one of A and B," or "at least one of A or B" may refer to all cases including (1) at least one A, (2) at least one B, or (3) both of at least one A and at least one B.

Expressions such as "first," "second," "1st," "2nd," or so on used herein may be used to refer to various elements regardless of order and/or importance, and it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to another element or as being coupled through other element (e.g., third element).

On the other hand, when a certain element (e.g., first element) is indicated as "directly coupled with/to" or "directly connected to" another element (e.g., second element), it may be understood as the other element (e.g., third element) not being present between the certain element and another element.

The expression "configured to... (or set up to)" used in the disclosure may be used interchangeably with, for example, "suitable for...," "having the capacity to...," "designed to...," "adapted to...," "made to...," or "capable of..." based on circumstance. The term "configured to...

(or set up to)" may not necessarily mean "specifically designed to" in terms of hardware.

Rather, in a certain circumstance, the expression "a device configured to..." may mean something that the device "may perform..." together with another device or components. For example, the phrase "a processor configured to (or set up to) perform A, B, or C" may mean a dedicated processor for performing a corresponding operation (e.g., embedded processor), or a generic-purpose processor (e.g., a central processing unit (CPU) or an application processor) capable of performing the corresponding operations by executing one or more software programs stored in the memory device.

The terms 'module' or 'part' used in the embodiments herein perform at least one function or operation, and may be implemented with a hardware or software, or a combination of hardware and software. Further, a plurality of 'modules' or a plurality of "parts," except for a 'module' or a 'part' which needs to be implemented to a specific hardware, may be integrated to at least one module and implemented in at least one processor.

The various elements and areas of the drawings have been schematically illustrated. Accordingly, the technical idea of the disclosure is not limited by relative sizes and distances illustrated in the accompanied drawings.

Embodiments of the disclosure will be described in detail below with reference to the accompanying drawings to aid in the understanding of those of ordinary skill in the art.

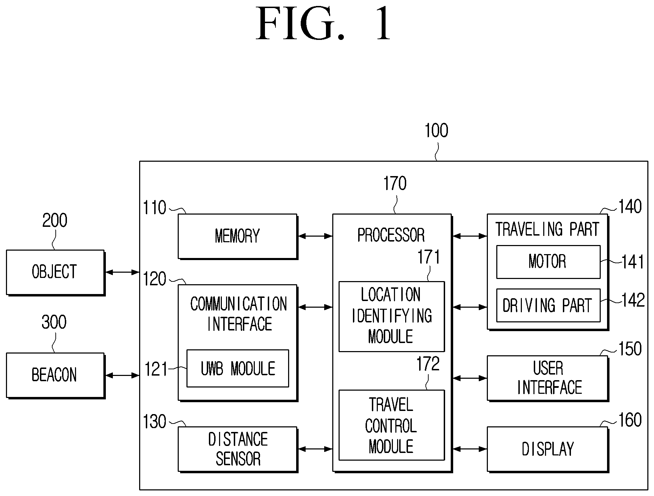

Referring to FIG. 1, a robot 100 may include a memory 110, a communication interface 120, a UWB module 121, a distance sensor 130, a traveling part 140, a user interface 150, a display 160, and a processor 170. The robot 100 may be configured such that at least some of the elements are omitted, and other elements may be further included.

The memory 110 may be configured to store at least one instruction associated with the robot 100. The memory 110 may be configured to store an operating system (O/S) for operating the robot 100. In addition, the memory 110 may be configured to store various software programs or applications for operating the robot 100 according to the various embodiments. Further, the memory 110 may include a semiconductor memory such as a flash memory, a magnetic storage medium such as a hard disk, or the like.

Specifically, the memory 110 may be configured to store various software modules for operating the robot 100 according to the various embodiments, and the processor 170 may be configured to control an operation of the robot 100 by executing the various software modules stored in the memory 110. That is, the memory 110 may be accessed by the processor 170 and reading-/writing/modifying/deleting/updating of data may be performed by the processor 170. The memory 110 may be configured to store information on at least one preset threshold value.

In the disclosure, the term 'memory 110' may be used as a meaning which includes the memory 110, a read only memory (ROM; not shown) in the processor 170, a random access memory (RAM; not shown), or a memory card (not shown; e.g., a micro SD card, a memory stick) mounted to the robot 100.

The communication interface 120 may include circuitry, and may be a configuration capable of communicating with an external device and a server. The communication interface 120 may be configured to perform communication with the external device and the server based on a wired or wireless communication method. Specifically, the communication interface 120 may be configured to perform communication with an object 200 and a beacon 300. According to an embodiment, the communication interface 120 may be configured to perform communication with the external device and the server through a wireless communication. In this case, the communication interface 120 may include a Wi-Fi module (not shown), a Bluetooth module (not shown), an infrared (IR) module, a local area network (LAN) module, an Ethernet module (not shown), and the like. Here, the respective communication modules may be implemented to at least one hardware chip form. The wireless communication module may include at least one communication chip configured to perform communication according to various wireless communication standards such as Zigbee, Universal Serial Bus (USB), Mobile Industry Processor Interface Camera Serial Interface (MIPI CSI), 3rd Generation (3G), 3rd Generation Partnership Project (3GPP), Long Term Evolution (LTE), LTE Advanced (LTE-A), 4th Generation (4G), 5th Generation (5G), and the like in addition to the above-described communication method. However, this is merely one embodiment, and the communication interface 120 may be configured to use at least one communication module from among the various communication modules.

Specifically, the communication interface 120 may include the UWB module 121. The UWB module 121 may be configured to transmit and receive a UWB signal with the UWB module included in the object 200 and the beacon 300. The Ultra-Wideband (UWB) signal may be a signal which uses an Ultra-Wideband (UWB) communication, and the UWB may mean a system which takes up an occupied bandwidth of greater than or equal to 20% of a center frequency or a wireless transmission technology which takes up an occupied bandwidth of greater than or equal to 500 MHz. The robot 100 may be configured to use the UWB signal received from the object 200, and identify a distance and an angle to the object 200.

The distance sensor 130 may be configured to calculate a distance between the distance sensor 130 (or robot) and the object (e.g., an object or an obstacle). The robot 100 may obtain map information by scanning a surrounding environment of the robot through the distance sensor 130, and identify the obstacle. The robot 100 may obtain map information of a surroundings of the robot 100 through the distance sensor 130 by scanning the surrounding environment of the robot 100 rotating once around in its place. Alternatively, the distance sensor 130 included in the robot 100 may obtain the map information of the surroundings of the robot 100 by scanning the surrounding environment of the robot rotating once around on its own. At this time, the distance sensor 130 may be implemented through various sensors for measuring the distance with the robot 100 and the object such as, for example, and without limitation, a Time of Flight (ToF) sensor, a laser sensor, a Lidar sensor, an ultrasonic sensor, and the like.

The traveling part 140 may be a configuration which includes a motor 141 and a driving part 142 coupled to the motor 141, the driving part 142 may be implemented with a wheel, legs of a robot, or the like, and the motor 141 may be configured to move the robot 100 by controlling the driving part 142 according to the control of the processor 170. In an example, based on the driving part 142 being implemented as a left wheel and a right wheel, the processor 170 may be configured to change or rotate a traveling direction of the robot 100 by transmitting a control signal for generating a first rotational force in the motor which is configured to rotate the left wheel, and transmitting a control signal for generating a second rotational force which is different from the first rotational force in the motor which is configured to rotate the right wheel.

The user interface 150 may be a configuration for receiving input of a user command to control the robot 100. The user interface may be implemented as a device such as a button, a touch pad, a mouse and a keyboard, or implemented also as a touch screen capable of performing a display function and an operation input function together therewith. Here, the button may be a button of various types such as a mechanical button formed at a random area at a front surface part or a side surface part, a rear surface part, or the like of an exterior of a main body of the robot 100, a touch pad, a wheel, and the like. The robot 100 may obtain various user inputs through the user interface 150.

The display 160 may be implemented as a display including an emissive device or a display including a non-emissive device and a backlight. For example, the display may be implemented as a display of various types such as, for example, and without limitation, a liquid crystal display (LCD), an organic light emitting diode (OLED) display, light emitting diodes (LEDs), a micro LED, a mini LED, a plasma display panel (PDP), a quantum dot (QD) display, quantum dot light emitting diodes (QLED), and the like. In the display 160, a driving circuit, which may be implemented in the form of an a-si thin film transistor (TFT), a low temperature poly silicon (LTPS) TFT, an organic TFT (OTFT), or the like, a backlight unit, and the like may be included together therewith. The processor 170 may be configured to control the display 160 to output status information of the robot 100. Here, the status information may include a variety of information associated with the operation of the robot 100 such as, for example, and without limitation, a traveling mode of the robot 100, information associated with a battery, whether to return to a docking station (not shown), and the like.

The processor 170 may be configured to control the overall operation and functions of the robot 100. Specifically, the processor 170 may be coupled with a configuration of the robot 100 which includes the memory 110, and by executing the at least one instruction stored in the memory 110 as described above, may be configured to control the overall the operation of the robot 100.

The processor 170 may be implemented in various methods. For example, the processor 170 may be implemented as at least one from among an application specific integrated circuit (ASIC), an embedded processor, a microprocessor, a hardware control logic, a hardware finite state machine (FSM), and a digital signal processor (DSP). In the disclosure, the term 'processor 170' may be used as a meaning which includes a central processing unit (CPU), a graphic processing unit (GPU), a main processing unit (MPU), and the like.

The processor 170 may include a location identifying module 171 and a travel control module 172. A plurality of modules according to the disclosure may be implemented as a software module or a hardware module, and based on the plurality of modules being implemented as a software module, the processor 170 may be configured to access the software module by loading the software module stored in the memory 110.

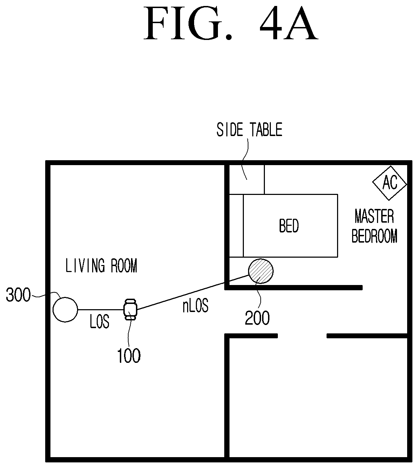

The location identifying module 171 may be configured to identify whether the robot 100 is located in a same space as with the object 200. The located in the same space may mean located in a space which is not divided by a wall. For example, based on a bedroom and a living room being divided by a wall, the robot 100 and the object 200 may be located in different spaces based on the robot 100 being in the bedroom and the object 200 being in the living room, and the robot 100 and the object 200 may be located in the same space based on the robot 100 and the object 200 both being located in the living room. At this time, a state in which the robot 100 is located in the same space as with the object 200 or the beacon 300 may be a Line of Sight (LOS) state. A state in which the robot 100 is located in a different space from the object 200 or the beacon 300 may be a Non-Line of Sight (NLOS) state. (See FIG. 4A)

The location identifying module 171 may be configured to identify whether the robot 100 is located in the same space as with the object 200 based on a first UWB signal received from the object 200. For example, the location identifying module 171 may be configured to identify the robot 100 as being located in the same space as with the object 200 based on an attenuation amount of the first UWB signal received from the object 200 being less than or equal to a first threshold value. The location identifying module 171 may be configured to identify that the robot 100 is located in a different space from the object 200 based on the attenuation amount of the first UWB signal received from the object 200 exceeding the first threshold value. The first threshold value may be a preset value stored in the memory 110.

The location identifying module 171 may be configured to identify whether the robot 100 is located in the same space as with the beacon 300. The location identifying module 171 may be configured to identify whether the robot 100 is located in the same space as with the object 200 based on a second UWB signal received from the beacon 300. For example, the location identifying module 171 may be configured to identify that the robot 100 is located in the same space as with the beacon 300 based on the attenuation amount of the second UWB signal received from the beacon 300 being less than or equal to the second threshold value. The location identifying module 171 may be configured to identify that the robot 100 is located in a different space from the beacon 300 based on the attenuation amount of the second UWB signal received from the object 200 exceeding the second threshold value. The second threshold value may be a preset value stored in the memory 110.

The travel control module 172 may control such that the robot 100 is to travel to the object 200 based on whether the robot 100 is located in the same space as with the object 200. Based on the robot 100 being identified the robot is located in the same space as with the object 200, the travel control module 172 may be configured to control the traveling part 140 to travel the robot 100 to the object 200 based on the UWB signal received from the object 200. Based on the robot 100 being identified the robot is located in a different space from the object 200, the travel control module 172 may be configured to control the traveling part 140 to move the robot 100 to the same space as with the object 200 by using coordinate information of the robot 100 and the object 200 received from the beacon 300 or a sensing value obtained from the distance sensor 130.

Based on identifying that the robot 100 is located in a different space from the object 200 and in the same space as with the beacon 300, the travel control module 172 may be configured to receive coordinate information of the robot 100 and coordinate information of the object 200 from the beacon 300, obtain surrounding map information of the robot 100 by using the sensing value obtained from the distance sensor 130, and control the traveling part 140 to move the robot 100 to the same space as with the object 200 based on the coordinate information of the robot 100, the coordinate information of the object 200, and the surrounding map information of the robot 100.

Based on identifying that the robot 100 is located in a different space from the object 200 and the beacon 300, the travel control module 172 may be configured to identify at least one candidate point based on the sensing value obtained through the distance sensor 130, and control the traveling part 140 to move the robot

100 to the same space as with the object 200 based on the identified at least one candidate point.

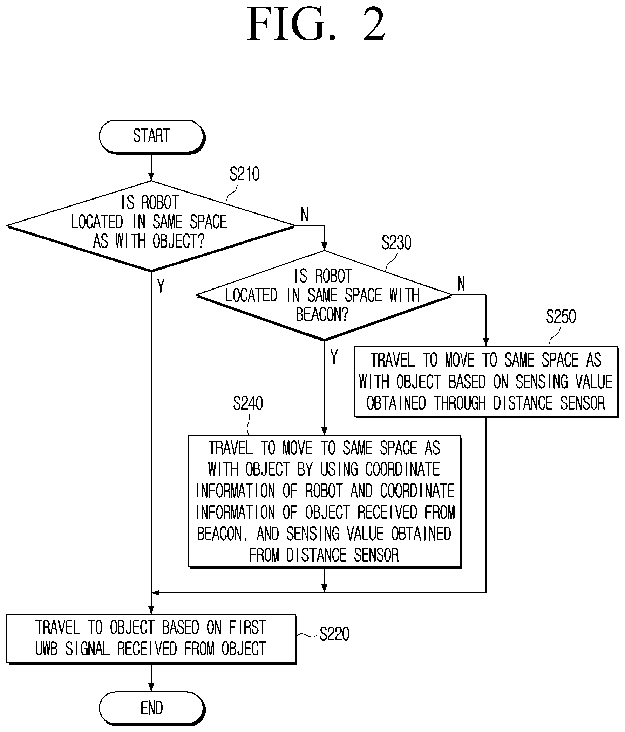

A detailed method of controlling the traveling part 140 by the travel control module 172 will be described in detail through FIG. 2.

Referring to FIG. 2, the processor 170 may be configured to identify whether the robot 100 is located in the same space as with the object 200 (S210). Based on the robot 100 being identified the robot is located in the same space as with the object 200 (S210-Y), the processor 170 may be configured such that the robot is able to travel to the object based on the first UWB signal received from the object 200 (S220).

The processor 170 may be configured to identify the distance and the angle between the robot 100 and the object 200 based on the first UWB signal received from the object 200, and control the traveling part 140 to travel the robot 100 to the object 200 based on the identified distance and angle.

The processor 170 may be configured to the distance of the object 200. The distance of the object 200 may mean a distance between the robot 100 and the object 200. The processor 170 may be configured to transmit and receive the UWB signal with the object 200 by utilizing at least one antenna. The processor 170 may be configured to identify the distance of the object 200 by using methods such as, for example, and without limitation, a Round Trip Time (RTT), a Radio Signal Strength Indicator (RSSI), Modulation and Coding Scheme (MCS) information, a Time of Flight (TOF), an Angle of Arrival (AoA), an Angle of Departure (AoD), and the like of the UWB signal transmitted to and received from the object 200. For example, the processor 170 may be configured to receive the first UWB signal transmitted from the object 200 through the UWB module 121. The processor 170 may be configured to obtain, by receiving the first UWB signal received at certain time intervals, information of time spent from a time the first UWB signal is transmitted until the time it is received. The processor 170 may be configured to compute distance information between the robot 100 and the object 200 by using information on the time spent, and identify the distance between the robot 100 and the object 200.

The processor 170 may be configured to identify a direction to the object 200. The direction to the object 200 may mean a direction or an angle in which the object 200 is positioned based on the traveling direction of the robot 100. The processor 170 may be configured to receive, from at least two antennas, the UWB signal in which a phase difference of a signal occurs from the object 200. The processor 170 may be configured to identify the direction to the object 200 by analyzing the phase difference of the UWB signal in which the phase difference occurs. For example, the processor 170 may be configured to identify the direction to the object 200 by utilizing the angle of arrival (AoA).

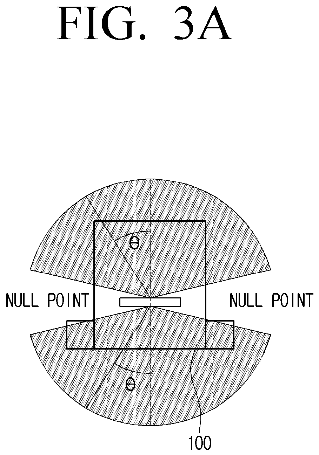

Referring to FIG. 3A, the direction to the object 200 which is identifiable by the processor 170 may be limited. For example, the direction to the object 200 which is identifiable by the processor 170 may be between -70° and 70°. Based on the object 200 being located in a direction not identifiable (null point) by the processor 170, a problem of the processor 170 not being able to identify the direction to the object 200 may occur. At this time, the processor 170 may be configured to control the traveling part 140 to rotate the robot 100 so that the object 200 is located in the direction identifiable by the processor 170.

When the processor 170 identifies the direction to the object 200, a problem of not being able to identify whether it is located at a front direction or a rear direction of the robot 100 may occur. The object 200 may include an inertial measurement unit (IMU) sensor. The IMU sensor may be configured to obtain activity level information of the object 200 by measuring an activity level according to time-varying of the object 200. The processor 170 may be configured to receive the activity level information of the object 200 from the IMU sensor included in the object 200 through the communication interface 120. The processor 170 may be configured to identify whether the direction to the object 200 is at the front direction or the rear direction of the robot 100 by using the received activity level information of the object 200.

The processor 170 may be configured to identify that the robot 100 is traveling to the rear direction or an opposite direction to the object 200 based on the distance of the object 200 becoming farther spart by a specific distance or more for a specific time. For example, based on the distance of the object becoming farther apart by 1 m or more for 3-seconds, the processor 170 may be configured to identify that the robot 100 is traveling in the opposite direction from the object 200. At this time, the processor 170 may be configured to identify the specific time and the specific direction according to the activity level information received from the object 200.

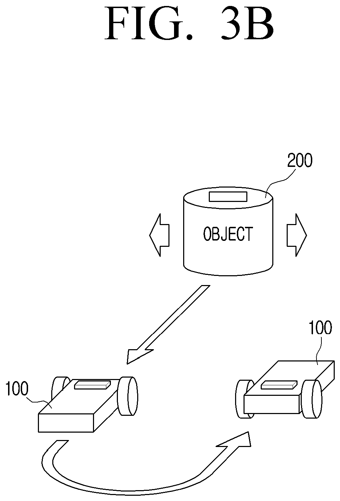

Referring to FIG. 3B, based on the robot 100 being identified as traveling to the rear direction or the opposite direction from the object 200, the processor 170 may be configured to control the traveling part 140 to rotate or travel to the opposite direction (object direction) from the currently traveling direction.

The processor 170 may be configured to control the traveling part 140 to travel the robot 100 to the object 200 based on the distance and direction of the identified object 200. The processor 170 may be configured to control, based on the distance and direction of the identified object 200, the traveling part 140 to move the robot 100 to a point at which the distance and angle to the object 200 are preset values. For example, a preset distance value may be 1 m, and a preset direction value may be 0°. At this time, the processor 170 may be configured to control the traveling part 140 to move the robot 100 to a location (traveling direction of the robot 100 and direction to the object 200 matching) at which the distance of the object is 1 m, and the direction to the object 200 is 0°. At this time, based on the location of the object 200 changing while the robot 100 moves to a first point at which the distance and angle to the object 200 are preset values, the processor 170 may be configured to control the traveling part 140 to move the robot 100 to a second point at which the distance and angle to the object 200 are preset values based on the changed location of the object 200. The preset distance value and the preset direction value may be values prestored in the memory 110, and may be values input through the user interface 150.

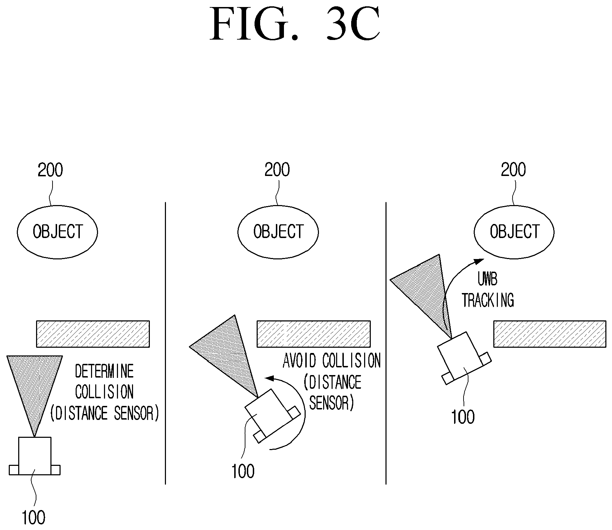

Referring to FIG. 3C, while the robot is traveling to the object 200, the processor 170 may be configured to identify an obstacle based on the sensing value obtained using the distance sensor 130. Based on it being identified that there is an obstacle present in the traveling direction of the robot 100, the processor 170 may be configured to control the traveling part 140 to reduce a traveling speed of the robot 100 and rotate the robot 100. Based on the robot 100 rotating and it being identified that there is no obstacle present in the traveling direction of the robot 100, the processor 170 may be configured to control the traveling part 140 to travel to the object 200 based on the first UWB signal received from the object 200.

Referring to FIG. 4A, based on the robot 100 being identified as located in a space different from the object 200 (S210-N), the processor 170 may be configured to identify whether the robot 100 is located in the same space as with the beacon 300 (S230). Based on the robot 100 being identified as located in the same space as with the beacon 300 (S230-Y), the processor 170 may be configured to control the traveling part 140 to move the robot 100 to the same space as with the object 200 by using the coordinate information of the robot and the coordinate information of the object received from the beacon 300 and the sensing value obtained from the distance sensor 130 (S240).

The beacon 300 may be configured to identify the coordinate information of the robot 100 and the object 200 based on the UWB signals received from the robot 100 and the object 200. Specifically, the beacon 300 may be configured to identify the coordinate information of the robot 100 by using the phase difference with a transmission and reception time of the UWB signal received from the robot 100 to a first antenna and a second antenna based on the UWB module including the first antenna and the second antenna. The beacon 300 may be configured to obtain the coordinate information of the object 200 in the same method as with the method of identifying the coordinate information of the robot 100. The processor 170 may be configured to obtain the coordinate information of the robot 100 and the coordinate information of the object 200 from the beacon 300 through the communication interface 120.

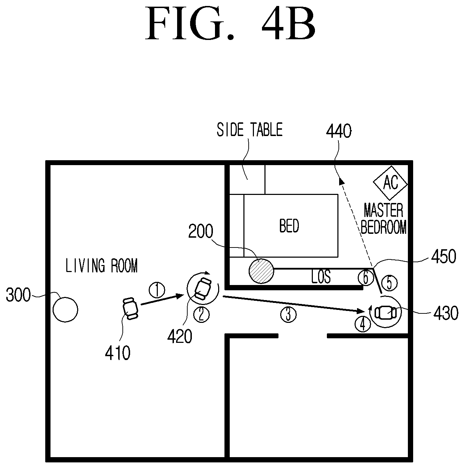

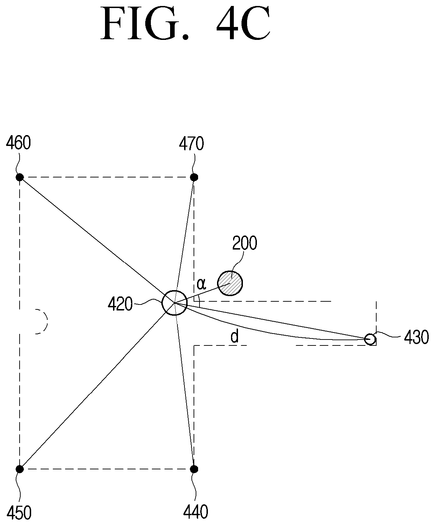

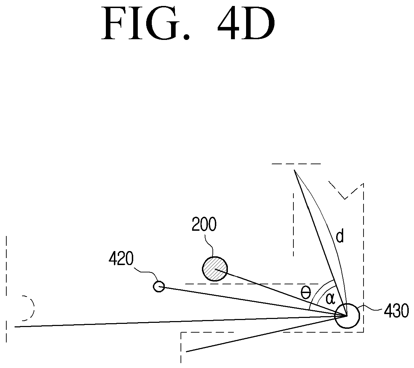

As illustrated in FIG. 4B, the processor 170 may be configured to move to a fourth point 440 passing a first point 410, a second point 420, and a third point 430 based on the coordinate information of the robot 100 and the coordinate information of the object 200 received from the beacon 300. While moving to the fourth point 440, the processor 170 may be configured to identify that the robot 100 is located in the same space as with the object 200 from a fifth point 450. At this time, the processor 170 may be configured to travel to the object 200 based on the first UWB signal received from the object 200. The detailed method of the robot 100 moving from the first point 410 to the fourth point 440 will be described through FIGS. 4C and 4D.

Referring to FIG. 4C, the robot 100 may be initially located at the first point 410. At this time, the processor 170 may be configured to travel straight in the direction to the object 200 from the first point 410. The robot 100 may be in a state in which it is no longer able to travel straight due to an obstacle being identified from the second point 420 or by an obstacle. At this time, the processor 170 may be configured to obtain map information of a space in which the robot 100 is located based on the sensing value obtained by scanning the surrounding environment of the robot 100 through the distance sensor 130.

The processor 170 may be configured to obtain an angle between a direction of a candidate point and the direction to the object 200, a distance from a scan point to the candidate point, and an angle between the direction of the candidate point and a direction of a previous scan point based on the map information obtained based on the sensing value obtained by scanning the surrounding environment of the robot 100 through the distance sensor 130, the coordinate information of the robot 100 received from the beacon 300, and the coordinate information of the object 200.

The processor 170 may be configured to obtain a score by Equation 1 below with respect to at least one candidate point. The processor 170 may be configured to identify a point with a highest score from among the at least one of the candidate points as a moving point. The processor 170 may be configured to control the traveling part 140 to move the robot 100 to the identified moving point. The processor 170 may be configured to identify a next moving point by scanning the surrounding environment of the robot 100 after moving to the identified moving point. Alternatively, the processor 170 may be configured to scan, based on traveling not being possible due to an obstacle being identified or due to an obstacle in the traveling direction while moving to the identified moving point, the surrounding environment of the robot 100 through the distance sensor 130 from the point at which the obstacle is identified. However, this is merely one embodiment, and the processor 170 may be configured to identify the moving point from among the at least one of the candidate points based on various methods.

【Equation 1】

$$w_1 * |a| + (w_2 * d) + \sum (w_n * \theta_n)$$

Equation 1 above may represent an equation for obtaining a score of at least one candidate point when the robot 100 is located at an n-th scan point. The processor 170 may be configured to obtain, from the n-th scan point, a score of the at least one candidate point, and identify a point corresponding to the highest score from among the at least one of the candidate points as the moving point. For example, the second point 420 may be a first scan point.

$\alpha$ may represent an angle between the direction of the at least one candidate point and the direction to the object 200 based on the n-th scan point.

d may represent a distance between the n-th scan point and the at least one candidate point. d may represent a maximum travelable distance from the n-th scan point to the at least one candidate point.

$\Theta n$ may represent an angle between a direction of an (n-1)-th scan point and the direction of the at least one candidate point based on the n-th scan point. For example, based on the robot 100 being currently located at a second scan point (or a third scan point) 430, $\Theta 2$ may represent an angle between the direction of the first scan point 420 and the direction of the at least one candidate point based on the second scan point 430. At this time, $\Theta 1$ may be 0 because the previous scan point is not present based on the first scan point.

$\omega 1, \omega 2, ..., \omega n$ may represent a weight ratio of each of the items. The weight ratio may be varied according to a number of movements, a moving time, the surrounding map information of the robot 100, the coordinate information of the robot 100, the coordinate information of the object 200, and the like, and the weight ratio at this time may be a value stored in the memory 110.

Referring to FIG. 4C, for example, from the second point, there may be candidate points including the third point 420, the fourth point 440, the fifth point 450, a sixth point 460 and a seventh point 470. The candidate point identified as having the highest score through Equation 1 from the second point 420 may be the third point 430. Based on the third point 430 being identified as the candidate point with the highest score from among the at least one of the candidate points, the processor 170 may be configured to control the traveling part 140 to move the robot 100 to the third point 430.

Referring to FIG. 4D, the candidate point identified as having the highest score through Equation 1 from the third point 430 may be the fourth point 440. Based on the fourth point 440 being identified as the candidate point with the highest score, the processor 170 may be configured to control the traveling part 140 to move the robot 100 to the fourth point 440. While the robot 100 is moving to the fourth point 440, the robot 100 may be located in the same space as with the object 200. At this time, the processor 170 may be configured to stop the robot 100 moving to the fourth point 440 and control the traveling part 140 to travel the robot 100 to the object 200 based on the first UWB signal received from the object 200.

Based on the robot 100 being identified as located in a space different from the beacon 300 (S230-N), the processor 170 may be configured to control the traveling part 140 to move the robot 100 to the same space as with the object 200 based on the sensing value obtained through the distance sensor 130 (S250).

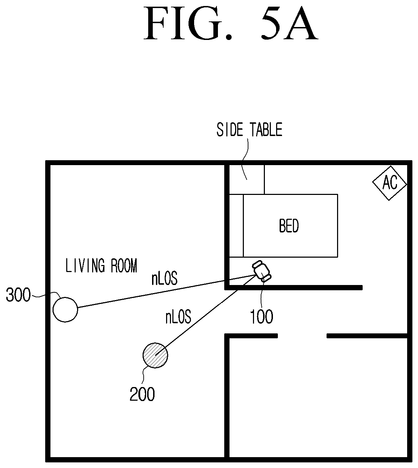

For example, as illustrated in FIG. 5A, the robot 100 may be located in a master bedroom, and the object 200 and the beacon 300 may be located in the living room. At this time, the processor 170 may be configured to identify at least one candidate point based on the sensing value obtained through the distance sensor 130, and control the traveling part 140 to move the robot 100 to the same space as with the object 200 based on the identified at least one candidate point.

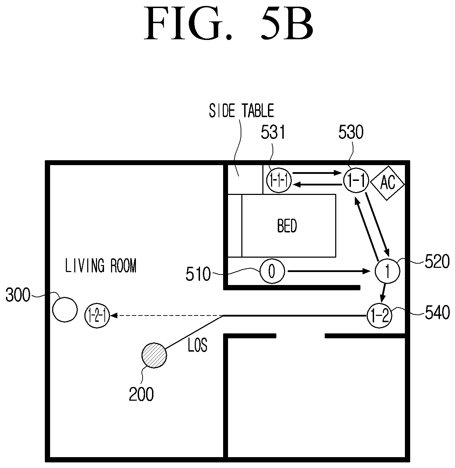

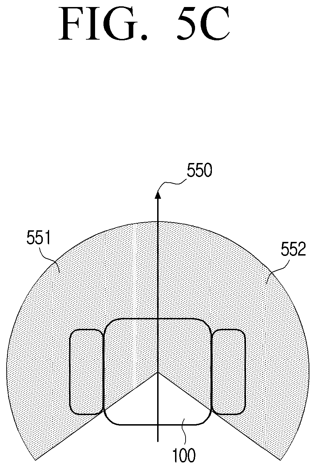

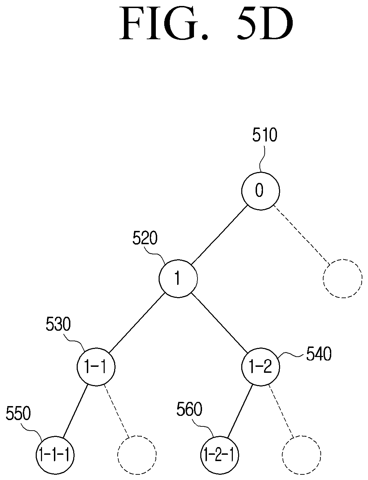

According to an embodiment, as illustrated in FIG. 5B, the robot 100 may start from a first point 510, and after moving to a second point 520, a third point 530 and a fourth point 531, when it is not possible to move any further, return to the second point 520 and move to a fifth point 540. At this time, the detailed method of the robot 100 traveling will be described through FIGS. 5C and 5D.

Referring to FIG. 5C, based on the robot 100 being identified as located in a space different from the object 200 and the beacon 300, the processor 170 may be configured to identify a point which is farthest from a left area 551 direction and a right area 552 direction based on the traveling direction of the robot 100 as the candidate point by using the sensing value obtained from the distance sensor 130. At this time, the processor 170 may be configured to exclude points at which the distances until the candidate points are less than a third threshold value from the candidate points. The processor 170 may be configured to integrate, based on an angle difference between the direction of the identified candidate point based on the left area 551 direction and the direction of the identified candidate point based on the right area 552 direction being less than a preset fourth threshold value based on the location of the robot 100, the two candidate points to one candidate point. To prevent from identifying the previous location of the robot 100 as the candidate point, the left area 551 and the right area 552 of the robot 100 may be an area which excludes a certain angle to the rear direction based on the traveling direction of the robot 100.

Based on the candidate point being identified, the processor 170 may be configured to control the traveling part 140 to move the robot 100 to the identified candidate point. When the two points are identified as the candidate points, the point farther in distance from the robot 100 from among the two points may be moved to first, but this is merely an embodiment, and the candidate point identified from the left area 551 may be moved to first or the candidate point identified from the right area 552 may be moved to first.

Referring to FIG. 5D, the processor 170 may be configured to store the identified candidate point as a TREE structure. Each NODE in the TREE structure may represent the identified candidate points. At this time, the identified candidate point in an upper NODE may be a lower NODE and may be connected with the upper NODE.

Point 0 510 may represent a point at which the robot is currently located. The candidate point identified from point 0 510 may be point 1 520. At this time, the processor 170 may be configured to control the traveling part 140 to move the robot 100 from point 0 510 to point 1 520. The candidate points identified from point 1 520 may be point 1-1 530 and point 1-2 540. The processor 170 may be configured to control the traveling part to move the robot 100 to point 1-1 530 which is the point farther in distance from among point 1-1 530 and point 1-2 540.

The processor 170 may be configured to identify point 1-1-1 550 as the candidate point from point 1-1 530. At this time, because the number of identified points is 1, the processor 170 may be configured to control the traveling part 140 to move the robot 100 to point 1-1-1 550.

There may not be a candidate point from point 1-1-1 550. For example, based on there being no points spaced apart in distance by the third threshold value from the left area 551 and the right area 552 of the robot 100 from point 1-1-1 550, there may be no candidate points identified from point 1-1-1 550. Based on there being no identified candidate points, the processor 170 may be configured to control the traveling part 140 to move the robot to point 1-1 530 which is an upper NODE of point 1-1-1 550.

Because the candidate point identified from point 1-1 530 is point 1-1-1 550, and point 1-1-1 550 is determined as a point with no identified candidate point, the processor 170 may be configured to control the traveling part 140 to move the robot 100 to point 1 520 which is an upper point of point 1-1 530. That is, based on there being no candidate points identified from a specific point or there being a history of the robot 100 travelling to all of the candidate points (or lower NODE) of the specific point, the processor 170 may be configured to control the traveling part 140 to move the robot 100 to a point corresponding to the upper NODE.

The candidate points identified from point 1 520 may be point 1-1 530 and point 1-2 540, and because the robot 100 has a history of having traveled to point 1-1 530, the processor 170 may be configured to control the traveling part 140 to move the robot 100 to point 1-2 540 excluding point 1-1 530 with the traveling history from among the identified candidate points.

Based on the robot 100 moving to point 1-2 540, the processor 170 may be configured to identify the candidate point from point 1-2 540. The candidate point identified from point 1-2 540 may be point 1-2-1 560. The processor 170 may be configured to control the traveling part 140 to move the robot 100 to point 1-2-1 560.

While the robot 100 is moving to point 1-2-1 560, the robot 100 may be located in the same space as with the object 200. At this time, the processor 170 may be configured to stop the robot 100 moving to point 1-2-1 560 and control the traveling part 140 to travel the robot 100 to the object 200 based on the first UWB signal received from the object 200.

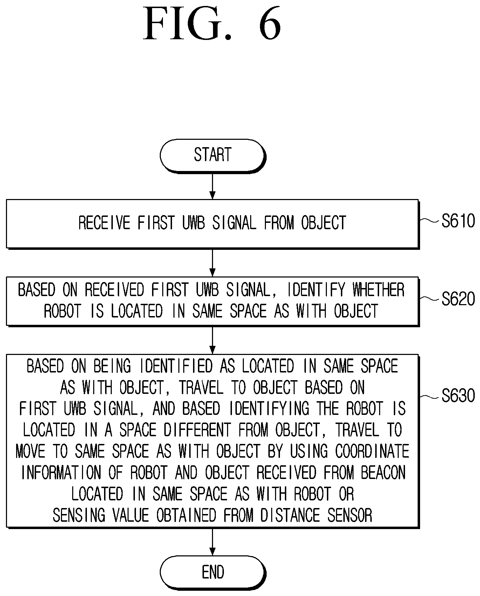

FIG. 6 is a flowchart illustrating a controlling method of the robot 100 according to an embodiment.

The robot 100 may receive the first UWB signal from the object 200 (S610). The robot 100 may receive the first UWB signal through the UWB module 121 included in the communication interface 120.

The robot 100 may identify, based on the received first UWB signal, whether the robot 100 is located in the same space as with the object (S620). The robot 100 may identify whether the robot 100 is located in the same space as with the object 200 by comparing the attenuation amount of the first UWB signal and the threshold value.

The robot 100 may identify as being located in the same space as with the object 200 based on the attenuation amount of the first UWB signal being less than the first threshold value. The robot 100 may identify as being located in a different space as with the object 200 based on the attenuation amount of the first UWB signal exceeding the first threshold value.

Based on identifying that the robot 100 is located in the same space as with the object 200, the robot 100 may travel to an object based on the received first UWB signal, and based on identifying the robot is located in a space different from the object 200, the robot 100 may travel to move to the same space as with the object 200 by using the coordinate information of the robot 100 and the object 200 received from the beacon 300 and the sensing value obtained from the distance sensor 130 (S630).

Based on the robot 100 being identified as located in the same space as with the object 200, the robot 100 may identify the distance and direction to the object 200 based on the first UWB signal received from the object 200, and travel to the object 200 based on the identified distance and direction.

Based on it being identified that the robot 100 is located in a space different from the object 200 and located in the same space as with the beacon 300, the robot 100 may obtain the surrounding map information of the robot 100 by using the coordinate information of the robot 100 received from the beacon 300, the coordinate information of the object 200, and the sensing value obtained from the distance sensor 130, and travel to move to the same space as with the object 200 based on the coordinate information of the robot 100, the coordinate information of the object 200 and the surrounding map information of the robot 100.

The term "part" or "module" used in the disclosure may include a unit configured as a hardware, software, or firmware, and may be used interchangeably with terms such as, for example, and without limitation, logic, logic blocks, components, circuits, or the like. "Part" or "module" may be a component integrally formed or a minimum unit or a part of the component performing one or more functions. For example, a module may be configured as an application-specific integrated circuit (ASIC).

The various embodiments may be implemented with software including instructions stored in a machine-readable storage media (e.g., computer). The machine may call an instruction stored in the storage medium, and as a device capable of operating according to the called instruction, may include the robot 100 according to the embodiments described. Based on the instruction being executed by the processor, the processor may directly or using other elements under the control of the processor perform a function corresponding to the instruction. The instruction may include a code generated by a compiler or executed by an interpreter. The machine-readable storage medium may be provided in the form of a non-transitory storage medium. Here, 'non-transitory' merely means that the storage medium is tangible and does not include a signal, and that the term does not differentiate data being semi-permanently stored or being temporarily stored in the storage medium.

According to an embodiment, a method according to the various embodiments disclosed may be provided included a computer program product. The computer program product may be exchanged between a seller and a purchaser as a commodity. The computer program product may be distributed in the form of a machine-readable storage medium (e.g., a compact disc read only memory (CD-ROM)), or distributed online through an application store (e.g., PLAYSTORE™). In the case of online distribution, at least a portion of the computer program product may be at least stored temporarily in a storage medium such as a server of a manufacturer, a server of an application store, or a memory of a relay server, or temporarily generated.

Each of the elements (e.g., a module or a program) according to various embodiments may be formed as a single entity or a plurality of entities, and some sub-elements of the abovementioned sub-elements may be omitted, or different sub-elements may be further included in the various embodiments. Alternatively or additionally, some elements (e.g., modules or programs) may be integrated into one entity to perform the same or similar functions performed by the respective elements prior to integration. Operations performed by a module, a program, or another element, in accordance with various embodiments, may be performed sequentially, in a parallel, repetitively, or in a heuristic manner, or at least some operations may be executed in a different order, omitted or a different operation may be added.

**Claims**

1. A controlling method of a robot (100), the method comprising:

receiving a first Ultra-Wideband, UWB, signal from an object (200);

identifying, based on the received first UWB signal, whether the robot (100) is located in a same room as with the object (200); and

in response to the identifying that the robot (100) is located in the same room as with the object (200), controlling the robot (100) to travel to the object (200) based on the received first UWB signal, and

in response to the identifying that the robot (100) is located in a room different from where the object (200) is located, controlling the robot (100) to move to the same room as with the object (200) by using coordinate information of the robot (100) and coordinate information of the object (200) received from a beacon (300) which is located in the same room as with the robot (100) wherein the identifying comprises:

identifying, based on an attenuation amount of the received first UWB signal being less than or equal to a first threshold value, that the robot (100) is located in the same room as with the object (200); and

identifying, based on an attenuation amount of the received first UWB signal exceeding the first threshold value, that the robot (100) is located in the room different from where the object (200) is located.

2. The method of claim 1, wherein the controlling of the (100) robot to travel to the object (200) further comprises identifying a distance and a direction to the object based on the received first UWB signal, and controlling the robot (100) to travel to the object based on the identified distance and the identified direction.

3. The method of claim 2, wherein the controlling of the robot (100) to travel to the object (200) further comprises based on the identified distance and the identified direction, controlling of the robot (100) to move to a point at which a distance and an angle to the object (200) are preset values.

4. The method of claim 1, further comprising:

receiving activity level information of the object (200) from an inertial measurement unit, IMU sensor, of the object;

identifying whether a traveling direction of the robot (100) matches a traveling direction to the object (200) based on the received activity level information and the identified distance; and

rotating the robot (100) in response to the identifying that the traveling direction of the robot (100) does not match the traveling direction to the object (200).

5. The method of claim 1, further comprising:

identifying an obstacle through a distance sensor while the robot (100) is traveling to the object (200); and

reducing a traveling speed of the robot (100) and rotating the robot (100) in response to the identifying of the obstacle.

6. The method of claim 1, further comprising:

receiving a second UWB signal from the beacon (300);

identifying, based on an attenuation amount of the second UWB signal received from the beacon (300) being less than or equal to a threshold value, that the robot (100) is located in the same room as with the beacon (300); and

identifying, based on an attenuation amount of the second UWB signal received from the beacon (300) exceeding the threshold value, that the robot (100) is located in room different from where the beacon (300) is located.

7. The method of claim 1, wherein the controlling of the robot (100) to move to the same room as with the object (200) further comprises:

in response to the identifying that the robot (100) is located in the room different from where the object (200) is located but located in the same room as with the beacon (300), receiving the coordinate information of the robot (100) and the coordinate information of the object (200) received from the beacon (300);

obtaining surrounding map information of the robot (100) by using the sensing value obtained from a distance sensor; and

controlling the robot (100) to move to the same room as with the object (200) based on the received coordinate information of the robot (100), the received coordinate information of the object (200), and the obtained surrounding map information.

8. The method of claim 1, further comprising:
identifying, in response to the identifying that the robot (100) is located in the room different from where the object (200) is located and located in the room different from where the beacon (300) is located, at least one candidate point based on the sensing value obtained through a distance sensor, and based on the identified at least one candidate point, controlling the robot (100) to move to the same room as with the object (200).

9. A robot (100), comprising:

a traveling part (140) configured to move the robot (100);

a communication interface (120) comprising an Ultra-Wideband, UWB, module to receive an external UWB signal;

a distance sensor (130) to measure a distance from the robot (100);

a memory (110) configured to store at least one instruction; and

a processor (170) which executes the at least one stored instruction to cause the following to be performed:

receiving, by executing the at least one instruction, a first UWB signal through the UWB module (121) from an object (200);

identifying, based on the received first UWB signal, whether it is located in a same room as with the object (200); and

in response to the identifying that the robot (100) is located in the same room as with the object (200), controlling the traveling part (140) to travel the robot (100) to the object (200) based on the received first UWB signal; and

in response to the identifying that the robot (100) is located in a room different from where the object (200) is located, controlling the traveling part (140) to move the robot (100) to the same room as with the object (200) by using coordinate information of the robot (100) and coordination information of the object (200) which is received from a beacon (300) located in the same room as with the robot (100) wherein the processor (170) is further configured to:

identify, based on an attenuation amount of the received first UWB signal being less than or equal to a threshold value, the robot is located in the same room as with the object (200); and

identify, based on an attenuation amount of the received first UWB signal exceeding the threshold value, the robot (100) is located in the room different from where the object (200) is located.

10. The robot (100) of claim 9, wherein the processor (170) is further configured to identify a distance and a direction to the object (200) based on the received first UWB signal, and control the traveling part (140) to travel to the object (200) based on the identified distance and the identified direction.

11. The robot (100) of claim 10, wherein the processor (170) is further configured to control, based on the identified distance and the identified direction, the traveling part (140) to move to a point at which a distance and an angle to the object (200) are preset values.

12. The robot of claim 9, wherein the processor (170) is further configured to:

receive activity level information of the object (200) from an inertial measurement unit, IMU sensor, of the object through the communication interface;

identify whether a traveling direction of the robot (100) matches a traveling direction to the object (200) based on the received activity level information and the identified distance; and

control, in response to the identifying that the traveling direction of the robot (100) does not match the traveling direction to the object (200), the traveling part to rotate the robot (100).

13. A computer readable recording medium comprising a program for executing a controlling method of a robot (100), the method comprising:

receiving a first Ultra-Wideband (UWB) signal from an object (200);

identifying, based on the received first UWB signal, whether the robot (100) is located in a same room as with the object (200); and

in response to the identifying that the robot (100) is located in the same room as with the object (200), controlling the robot (100) to travel to the object (200) based on the received first UWB signal, and in response to the identifying that the robot (100) is located in a room different from where the object (200) is located, controlling the robot (100) to move to the same room as with the object (200) by using coordinate information of the robot (100) and coordinate information of the object (200) received from a beacon (300) which is located in the same room as with the robot (100), wherein the identifying comprises:

identifying, based on an attenuation amount of the received first UWB signal being less than or equal to a first threshold value, that the robot (100) is located in the same room as with the object (200); and

identifying, based on an attenuation amount of the received first UWB signal exceeding the first threshold value, that the robot (100) is located in the room different from where the object (200) is located.

**Patentansprüche**

1. Steuerungsverfahren eines Roboters (100), wobei das Verfahren Folgendes umfasst:

Empfangen eines ersten Ultrabreitband-, UWB-,Signals von einem Objekt (200); Identifizieren, basierend auf dem empfangenen ersten UWB-Signal, ob sich der Roboter (100) in einem gleichen Raum wie das Objekt (200) befindet; und als Reaktion auf die Feststellung, dass sich der Roboter (100) in demselben Raum wie das Objekt (200) befindet, Steuern des Roboters (100), um sich basierend auf dem empfangenen ersten UWB-Signal zu dem Objekt (200) zu bewegen, und als Reaktion auf die Feststellung, dass sich der Roboter (100) in einem Raum befindet, der sich von dem Raum unterscheidet, in dem sich das Objekt (200) befindet, Steuern des Roboters (100), um sich in denselben Raum wie das Objekt (200) zu bewegen, unter Verwendung von Koordinateninformationen des Roboters (100) und Koordinateninformationen des Objekts (200), die von einer Bake (300) empfangen werden, die sich in demselben Raum wie der Roboter (100) befindet, wobei die Feststellung umfasst:

Identifizieren, basierend auf einem Dämpfungsbetrag des empfangenen ersten UWB-Signals, der kleiner oder gleich einem ersten Schwellenwert ist, dass sich der Roboter (100) in demselben Raum wie das Objekt (200) befindet; und Identifizieren, basierend auf einem Dämpfungsbetrag des empfangenen ersten UWB-Signals, der den ersten Schwellenwert überschreitet, dass sich der Roboter (100) in dem Raum befindet, der sich von dem Raum unterscheidet, in dem sich das Objekt (200) befindet.

2. Verfahren nach Anspruch 1, wobei das Steuern des Roboters (100), um sich zu dem Objekt (200) zu bewegen, ferner das Identifizieren eines Abstands und einer Richtung zum Objekt basierend auf dem empfangenen ersten UWB-Signal umfasst, und das Steuern des Roboters (100), um sich zu dem Objekt basierend auf dem identifizierten Abstand und der identifizierten Richtung zu bewegen.

3. Verfahren nach Anspruch 2, wobei das Steuern des Roboters (100), um sich zu dem Objekt (200) zu bewegen, ferner basierend auf dem identifizierten Abstand und der identifizierten Richtung das Steuern des Roboters (100) umfasst, um sich zu einem Punkt zu bewegen, an dem ein Abstand und ein Winkel zum Objekt (200) voreingestellte Werte sind.

4. Verfahren nach Anspruch 1, ferner umfassend:

Empfangen von Aktivitätsniveauinformationen des Objekts (200) von einem inertialen Messeinheits-, IMU-,Sensor des Objekts; Identifizieren, ob eine Fahrtrichtung des Roboters (100) mit einer Fahrtrichtung zum Objekt (200) übereinstimmt, basierend auf den empfangenen Aktivitätsniveauinformationen und des identifizierten Abstands; und Drehen des Roboters (100) als Reaktion auf die Feststellung, dass die Fahrtrichtung des Roboters (100) nicht mit der Fahrtrichtung zum Objekt (200) übereinstimmt.

5. Verfahren nach Anspruch 1, ferner umfassend:

Identifizieren eines Hindernisses durch einen Abstandssensor, während sich der Roboter (100) zum Objekt (200) bewegt; und Verringern einer Fahrgeschwindigkeit des Roboters (100) und Drehen des Roboters (100) als Reaktion auf das Erkennen des Hindernisses.

6. Verfahren nach Anspruch 1, ferner umfassend:

Empfangen eines zweiten UWB-Signals von der Bake (300); Identifizieren, basierend auf einem Dämpfungsbetrag des von der Bake (300) empfangenen zweiten UWB-Signals, der kleiner oder gleich einem Schwellenwert ist, dass sich der Roboter (100) in demselben Raum wie die Bake (300) befindet; und Identifizieren, basierend auf einem Dämpfungsbetrag des zweiten UWB-Signals, das von der Bake (300) empfangen wurde und den Schwellenwert überschreitet, dass sich der Roboter (100) in einem anderen Raum befindet als dem, in dem sich die Bake (300) befindet.

7. Verfahren nach Anspruch 1, wobei die Steuerung des Roboters (100), sich in denselben Raum wie das Objekt (200) zu bewegen, ferner umfasst:

als Reaktion auf die Feststellung, dass sich der Roboter (100) in einem anderen Raum als das Objekt (200) befindet, jedoch in demselben Raum wie die Bake (300), Empfangen der Koordinateninformationen des Roboters (100) und der Koordinateninformationen des Objekts (200), die von der Bake (300) empfangen wurden; Erhalten von Umgebungskarteninformationen des Roboters (100) unter Verwendung des von einem Abstandssensor erhaltenen Erfassungswertes; und Steuern des Roboters (100), um sich basierend auf den empfangenen Koordinateninformationen des Roboters (100), den empfangenen Koordinateninformationen des Objekts (200) und den erhaltenen Umgebungskarteninformationen in denselben Raum wie das Objekt (200) zu bewegen.

8. Verfahren nach Anspruch 1, ferner umfassend: Identifizieren, als Reaktion auf die Feststellung, dass sich der Roboter (100) in dem Raum befindet, der sich von dem Raum unterscheidet, in dem sich das Objekt (200) befindet, und sich in dem Raum befindet, der sich von dem Raum unterscheidet, in dem sich die Bake (300) befindet, mindestens eines Kandidatenpunkts basierend auf dem Erfassungswert, der durch einen Abstandssensor erhalten wurde, und Steuern des Roboters (100) basierend auf dem identifizierten mindestens einen Kandidatenpunkt, um sich zu demselben Raum wie mit dem Objekt (200) zu bewegen.

9. Roboter (100), umfassend:

ein Fahrteil (140), das zum Bewegen des Roboters (100) konfiguriert ist;
eine Kommunikationsschnittstelle (120), die ein Ultrabreitband-, UWB-,Modul umfasst, um ein externes UWB-Signal zu empfangen;
einen Abstandssensor (130) zur Messung eines Abstands zum Roboter (100);
einen Speicher (110), der zum Speichern mindestens einer Anweisung konfiguriert ist; und
einen Prozessor (170), der die mindestens eine gespeicherte Anweisung ausführt, um Folgendes zu bewirken:

Empfangen eines ersten UWB-Signals über das UWB-Modul (121) von einem Objekt (200) durch Ausführen der mindestens einen Anweisung;
Identifizieren, basierend auf dem empfangenen ersten UWB-Signal, ob er sich in einem gleichen Raum wie das Objekt (200) befindet; und
als Reaktion auf die Feststellung, dass sich der Roboter (100) im selben Raum wie das Objekt (200) befindet, Steuern des Fahrteils (140), um den Roboter (100) basierend auf dem empfangenen ersten UWB-Signal zu dem Objekt (200) zu fahren; und
als Reaktion auf die Feststellung, dass sich der Roboter (100) in einem Raum befindet, der sich von dem Raum unterscheidet, in dem sich das Objekt (200) befindet, Steuern des Fahrteils (140), um den Roboter (100) unter Verwendung von Koordinateninformationen des Roboters (100) und Koordinationsinformationen des Objekts (200), die von einer Bake (300) empfangen werden, die sich in demselben Raum wie der Roboter (100) befindet, in denselben Raum wie das Objekt (200) zu bewegen, wobei der Prozessor (170) ferner konfiguriert ist zum:

Identifizieren, basierend auf einem Dämpfungsbetrag des empfangenen ersten UWB-Signals, der kleiner oder gleich einem Schwellenwert ist, dass sich der Roboter in demselben Raum wie das Objekt (200) befindet; und
Identifizieren, basierend auf einem Dämpfungsbetrag des empfangenen ersten UWB-Signals, der den Schwellenwert überschreitet, dass sich der Roboter (100) in dem Raum befindet, der sich von dem Raum unterscheidet, in dem sich das Objekt (200) befindet.

10. Roboter (100) nach Anspruch 9, wobei der Prozessor (170) ferner konfiguriert ist, um basierend auf dem empfangenen ersten UWB-Signal einen Abstand und eine Richtung zum Objekt (200) zu identifizieren und das Fahrteil (140) zu steuern, um sich basierend auf dem identifizierten Abstand und der identifizierten Richtung zum Objekt (200) zu bewegen.

11. Roboter (100) nach Anspruch 10, wobei der Prozessor (170) ferner konfiguriert ist, um basierend auf dem identifizierten Abstand und der identifizierten Richtung zu steuern, dass sich das Fahrteil (140) zu einem Punkt bewegt, an dem ein Abstand und ein Winkel zum Objekt (200) voreingestellte Werte sind.

12. Roboter nach Anspruch 9, wobei der Prozessor (170) ferner konfiguriert ist zum:

Empfangen von Aktivitätsniveauinformationen des Objekts (200) von einem inertialen Messeinheits-, IMU-,Sensor des Objekts über die Kommunikationsschnittstelle;
Identifizieren, ob eine Fahrtrichtung des Roboters (100) mit einer Fahrtrichtung zum Objekt (200) übereinstimmt, basierend auf den empfangenen Aktivitätsniveauinformationen und des identifizierten Abstands; und
als Reaktion auf die Feststellung, dass die Fahrtrichtung des Roboters (100) nicht mit der Fahrtrichtung zum Objekt (200) übereinstimmt, Steuern des Fahrteils, um den Roboter (100) zu drehen.

13. Computerlesbares Aufzeichnungsmedium, umfassend ein Programm zum Ausführen eines Steuerungsverfahrens eines Roboters (100), wobei das Verfahren umfasst:

Empfangen eines ersten Ultrabreitband-(UWB) Signals von einem Objekt (200);

Identifizieren, basierend auf dem empfangenen ersten UWB-Signal, ob sich der Roboter (100) in einem gleichen Raum wie das Objekt (200) befindet; und

als Reaktion auf die Feststellung, dass sich der Roboter (100) in demselben Raum wie das Objekt (200) befindet, Steuern des Roboters (100), um sich basierend auf dem empfangenen ersten UWB-Signal zu dem Objekt (200) zu bewegen, und als Reaktion auf die Feststellung, dass sich der Roboter (100) in einem Raum befindet, der sich von dem Raum unterscheidet, in dem sich das Objekt (200) befindet, Steuern des Roboters (100), um sich in denselben Raum wie das Objekt (200) zu bewegen, unter Verwendung von Koordinateninformationen des Roboters (100) und Koordinateninformationen des Objekts (200), die von einer Bake (300) empfangen werden, die sich in demselben Raum wie der Roboter (100) befindet, wobei die Feststellung umfasst:

Identifizieren, basierend auf einem Dämpfungsbetrag des empfangenen ersten UWB-Signals, der kleiner oder gleich einem ersten Schwellenwert ist, dass sich der Roboter (100) in demselben Raum wie das Objekt (200) befindet; und

Identifizieren, basierend auf einem Dämpfungsbetrag des empfangenen ersten UWB-Signals, der den ersten Schwellenwert überschreitet, dass sich der Roboter (100) in dem Raum befindet, der sich von dem Raum unterscheidet, in dem sich das Objekt (200) befindet.

## Revendications

1. Procédé de commande d'un robot (100), le procédé comprenant :

recevoir un premier signal à bande ultra-large, UWB, provenant d'un objet (200) ;

en se basant sur le premier signal UWB reçu, déterminer si le robot (100) se trouve dans le même lieu que l'objet (200) ; et

en réponse à l'identification du fait que le robot (100) est situé dans le même lieu que l'objet (200), commander le robot (100) pour qu'il se déplace vers l'objet (200) en se basant sur le premier signal UWB reçu, et

en réponse à l'identification du fait que le robot (100) est situé dans un lieu différent de celui où se trouve l'objet (200), commander le robot (100) pour qu'il se déplace vers le même lieu que l'objet (200) en utilisant les informations de coordonnées du robot (100) et les informations de coordonnées de l'objet (200) reçues d'une balise (300) qui est située dans le même lieu que le robot (100), l'identification comprenant :

en se basant sur une valeur d'atténuation du premier signal UWB reçu étant inférieure ou égale à une première valeur seuil, identifier que le robot (100) se trouve dans le même lieu que l'objet (200) ; et

en se basant sur une valeur d'atténuation du premier signal UWB reçu dépassant la première valeur seuil, identifier que le robot (100) se trouve dans un lieu différent de celui où se trouve l'objet (200).

2. Procédé de la revendication 1, dans lequel la commande du robot (100) pour se rendre à l'objet (200) comprend en outre l'identification d'une distance et d'une direction vers l'objet en se basant sur le premier signal UWB reçu, et la commande du robot (100) pour se rendre à l'objet en se basant sur la distance identifiée et la direction identifiée.

3. Procédé de la revendication 2, dans lequel la commande du robot (100) pour se rendre à l'objet (200) comprend en outre, en se basant sur la distance identifiée et la direction identifiée, la commande du robot (100) pour se déplacer vers un point où une distance et un angle par rapport à l'objet (200) sont des valeurs prédéfinies.

4. Procédé de la revendication 1, comprenant en outre :

recevoir des informations de niveau d'activité de l'objet (200) en provenance d'un capteur d'unité de mesure inertielle, IMU, de l'objet ;

déterminer si une direction de déplacement du robot (100) correspond à une direction de déplacement vers l'objet (200) en se basant sur les informations de niveau d'activité reçues et la distance identifiée ; et

faire tourner le robot (100) en réponse à l'identification du fait que la direction de déplacement du robot (100) ne correspond pas à la direction de déplacement vers l'objet (200).

5. Procédé de la revendication 1, comprenant en outre :

identifier un obstacle à l'aide d'un capteur de distance pendant que le robot (100) se déplace vers l'objet (200) ; et

réduire une vitesse de déplacement du robot (100) et faire tourner le robot (100) en réponse à l'identification de l'obstacle.

**6.** Procédé de la revendication 1, comprenant en outre :

recevoir un second signal UWB de la balise (300) ;

en se basant sur une valeur d'atténuation du second signal UWB reçu de la balise (300) étant inférieure ou égale à une valeur seuil, identifier que le robot (100) est situé dans le même lieu que la balise (300) ; et

en se basant sur une valeur d'atténuation du second signal UWB reçu de la balise (300) dépassant la valeur seuil, identifier que le robot (100) se trouve dans un lieu différent de celui où se trouve la balise (300).

**7.** Procédé de la revendication 1, dans lequel la commande du robot (100) pour se déplacer vers le même lieu où se trouve l'objet (200) comprend en outre :

en réponse à l'identification du fait que le robot (100) est situé dans le lieu différent de celui où se trouve l'objet (200) mais situé dans le même lieu où se trouve la balise (300), recevoir les informations de coordonnées du robot (100) et les informations de coordonnées de l'objet (200) reçues de la balise (300) ;

obtenir des informations de carte environnante du robot (100) en utilisant la valeur de détection obtenue à partir d'un capteur de distance ; et

commander le robot (100) pour qu'il se déplace dans le même lieu que l'objet (200) en se basant sur les informations de coordonnées reçues du robot (100), les informations de coordonnées reçues de l'objet (200) et les informations de carte environnante obtenues.

**8.** Procédé de la revendication 1, comprenant en outre : en réponse à l'identification du fait que le robot (100) est situé dans le lieu différent de celui où l'objet (200) est situé et situé dans le lieu différent de celui où la balise (300) est située, identifier au moins un point candidat basé sur la valeur de détection obtenue par un capteur de distance, et basé sur l'au moins un point candidat identifié, commander le robot (100) pour qu'il se déplace dans le même lieu où se trouve l'objet (200).

**9.** Robot (100), comprenant :

une partie mobile (140) configurée pour déplacer le robot (100) ;

une interface de communication (120) comprenant un module à bande ultra-large, UWB, destiné à recevoir un signal UWB externe ;

un capteur de distance (130) pour mesurer une distance par rapport au robot (100) ;

une mémoire (110) configurée pour stocker au moins une instruction ; et

un processeur (170) qui exécute l'au moins une instruction stockée afin de réaliser ce qui suit :

recevoir, en exécutant l'au moins une instruction, un premier signal UWB à travers le module UWB (121) en provenance d'un objet (200) ;

identifier, en se basant sur le premier signal UWB reçu, s'il est situé dans un même lieu que l'objet (200) ; et

en réponse à l'identification du fait que le robot (100) est situé dans la même pièce que l'objet (200), commander la partie mobile (140) pour déplacer le robot (100) vers l'objet (200) en se basant sur le premier signal UWB reçu ; et

en réponse à l'identification du fait que le robot (100) est situé dans un lieu différent de celui où se trouve l'objet (200), commander la partie mobile (140) pour déplacer le robot (100) vers le même lieu que l'objet (200) en utilisant les informations de coordonnées du robot (100) et les informations de coordination de l'objet (200) qui sont reçues d'une balise (300) située dans le même lieu que le robot (100), le processeur (170) étant en outre configuré pour :

en se basant sur une valeur d'atténuation du premier signal UWB reçu étant inférieure ou égale à une valeur seuil, identifier que le robot se trouve dans le même lieu que l'objet (200) ; et

en se basant sur une valeur d'atténuation du premier signal UWB reçu dépassant la valeur seuil, identifier que le robot (100) se trouve dans un lieu différent de celui où se trouve l'objet (200).

**10.** Robot (100) de la revendication 9, dans lequel le processeur (170) est en outre configuré pour identifier une distance et une direction vers l'objet (200) en se basant sur le premier signal UWB reçu, et commander la partie mobile (140) pour qu'elle se déplace vers l'objet (200) en se basant sur la distance identifiée et la direction identifiée.

**11.** Robot (100) de la revendication 10, dans lequel le processeur (170) est en outre configuré pour commander, en se basant sur la distance identifiée et la direction identifiée, le déplacement de la partie mobile (140) vers un point où une distance et un angle par rapport à l'objet (200) sont des valeurs prédéfinies.

**12.** Robot de la revendication 9, dans lequel le processeur (170) est en outre configuré pour :

recevoir des informations de niveau d'activité de l'objet (200) à partir d'un capteur d'unité de mesure inertielle, IMU, de l'objet par l'intermédiaire de l'interface de communication ; déterminer si une direction de déplacement du robot (100) correspond à une direction de déplacement vers l'objet (200) en se basant sur les informations de niveau d'activité reçues et la distance identifiée ; et commander, en réponse à l'identification du fait que la direction de déplacement du robot (100) ne correspond pas à la direction de déplacement vers l'objet (200), la partie de déplacement pour faire tourner le robot (100).

13. Support d'enregistrement lisible par ordinateur comprenant un programme pour exécuter un procédé de commande d'un robot (100), le procédé comprenant :

recevoir un premier signal à bande ultra-large (UWB) provenant d'un objet (200) ; en se basant sur le premier signal UWB reçu, déterminer si le robot (100) se trouve dans le même lieu que l'objet (200) ; et en réponse à l'identification du fait que le robot (100) est situé dans le même lieu où se trouve l'objet (200), commander le robot (100) pour se déplacer vers l'objet (200) en se basant sur le premier signal UWB reçu, et en réponse à l'identification du fait que le robot (100) est situé dans un lieu différent de celui où se trouve l'objet (200), commander le robot (100) pour qu'il se déplace vers le même lieu que l'objet (200) en utilisant les informations de coordonnées du robot (100) et les informations de coordonnées de l'objet (200) reçues d'une balise (300) qui est située dans le même lieu que le robot (100), l'identification comprenant :

en se basant sur une valeur d'atténuation du premier signal UWB reçu étant inférieure ou égale à une première valeur seuil, identifier que le robot (100) se trouve dans le même lieu que l'objet (200) ; et en se basant sur une valeur d'atténuation du premier signal UWB reçu dépassant la première valeur seuil, identifier que le robot (100) se trouve dans un lieu différent de celui où se trouve l'objet (200).

# FIG. 1

# FIG. 2

```
                    ┌──────────────┐
                    │    START     │
                    └──────┬───────┘
                           │
                           ▼            S210
              ╱────────────────────────╲      N
            ╱      IS ROBOT              ╲─────────┐
            ╲  LOCATED IN SAME SPACE     ╱         │
              ╲    AS WITH OBJECT?     ╱           ▼            S230
                ╲──────────┬─────────╱    ╱────────────────────────╲     N
                         Y │           ╱     IS ROBOT               ╲────────┐
                           │           ╲  LOCATED IN SAME SPACE WITH ╱       │
                           │             ╲      BEACON?            ╱         │
                           │               ╲──────────┬──────────╱          │   S250
                           │                        Y │     ┌───────────────▼──────────────┐
                           │                          │     │ TRAVEL TO MOVE TO SAME SPACE AS│
                           │             S240          │     │ WITH OBJECT BASED ON SENSING VALUE│
                           │                          │     │ OBTAINED THROUGH DISTANCE SENSOR│
                           │           ┌──────────────▼──────────────┐└──────────────┬──────────────┘
                           │           │ TRAVEL TO MOVE TO SAME SPACE AS│             │
                           │           │ WITH OBJECT BY USING COORDINATE│             │
                           │           │ INFORMATION OF ROBOT AND COORDINATE│          │
                           │           │ INFORMATION OF OBJECT RECEIVED FROM│          │
                           │           │ BEACON, AND SENSING VALUE OBTAINED │          │
                           │           │ FROM DISTANCE SENSOR           │             │
                           │           └──────────────┬──────────────┘             │
                           │                          │                            │
                           └───────────┬──────────────┴────────────────────────────┘
                                       ▼
              ┌────────────────────────────────────┐
              │ TRAVEL TO OBJECT BASED ON FIRST     │ ～S220
              │ UWB SIGNAL RECEIVED FROM OBJECT     │
              └────────────────┬───────────────────┘
                               ▼
                    ┌──────────────┐
                    │     END      │
                    └──────────────┘
```

# FIG. 3A

NULL POINT    NULL POINT

100

# FIG. 3B

# FIG. 3C

# FIG. 4A

SIDE TABLE

AC

MASTER
BEDROOM

BED

LIVING ROOM

300

LOS

nLOS

200

100

# FIG. 4B

# FIG. 4C

# FIG. 4D

# FIG. 5A

# FIG. 5B

# FIG. 5C

# FIG. 5D

# FIG. 6

```
                         ┌─────────────┐
                         │    START    │
                         └──────┬──────┘
                                │
          ┌─────────────────────▼──────────────────────┐
          │   RECEIVE FIRST UWB SIGNAL FROM OBJECT      │───S610
          └─────────────────────┬──────────────────────┘
                                │
          ┌─────────────────────▼──────────────────────┐
          │ BASED ON RECEIVED FIRST UWB SIGNAL, IDENTIFY│
          │   WHETHER ROBOT IS LOCATED IN SAME SPACE    │───S620
          │             AS WITH OBJECT                  │
          └─────────────────────┬──────────────────────┘
                                │
          ┌─────────────────────▼──────────────────────┐
          │ BASED ON BEING IDENTIFIED AS LOCATED IN     │
          │ SAME SPACE AS WITH OBJECT, TRAVEL TO OBJECT │
          │ BASED ON FIRST UWB SIGNAL, AND BASED        │
          │ IDENTIFYING THE ROBOT IS LOCATED IN A SPACE │
          │ DIFFERENT FROM OBJECT, TRAVEL TO MOVE TO    │───S630
          │ SAME SPACE AS WITH OBJECT BY USING          │
          │ COORDINATE INFORMATION OF ROBOT AND OBJECT  │
          │ RECEIVED FROM BEACON LOCATED IN SAME SPACE  │
          │ AS WITH ROBOT OR SENSING VALUE OBTAINED     │
          │ FROM DISTANCE SENSOR                        │
          └─────────────────────┬──────────────────────┘
                                │
                         ┌──────▼──────┐
                         │     END     │
                         └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020223056 A1
- CN 112130559 A

- US 2014142757 A1